# EUROPEAN PATENT SPECIFICATION

(11) **EP 4 094 980 B1**
(45) Date of publication and mention of the grant of the patent: **01.11.2023**
(21) Application number: 22175758.6
(22) Date of filing: 27.05.2022
(51) Int. Cl.: B60N 2/56, B60H 1/00

(54) **THERMAL MANAGEMENT SYSTEM AND ELECTRIC VEHICLE**
THERMISCHES VERWALTUNGSSYSTEM UND ELEKTROFAHRZEUG
SYSTÈME DE GESTION THERMIQUE ET VÉHICULE ÉLECTRIQUE

(30) Priority: 28.05.2021 CN 202110588847
(43) Date of publication of application: 30.11.2022
(73) Proprietor: Huawei Digital Power Technologies Co., Ltd., Shenzhen, 518043 (CN)
(72) Inventor: HE, Xiaojing, Shenzhen 518129 (CN); WANG, Yanzhong, Shenzhen 518129 (CN)
(74) Representative: Gill Jennings & Every LLP

(56) References cited:
- WO-A1-2020/184869
- CN-A- 110 816 373
- KR-A- 20110 131 885

## Description

### TECHNICAL FIELD

This application relates to the field of electric vehicle technologies, and in particular, to a thermal management system and an electric vehicle.

### BACKGROUND

At present, electric vehicles develop rapidly. An electric vehicle uses a battery as a power source and replaces a fuel engine with a motor. This not only can achieve zero emission, low noise, and zero pollution, but also can save a lot of increasingly depleted oil energy. As an electric vehicle power battery technology becomes increasingly mature and develops, development of electric vehicles will definitely become a main development trend in a future automobile industry.

With rapid development of electric vehicles, users impose increasingly high requirements on comfort of the electric vehicles. To fulfill the users' requirements, temperature-controlled seat designs are added to some electric vehicles to adjust temperatures of seats, thereby satisfying thermal comfort requirements of the users. Existing temperature-controlled seats with cooling functions are generally cooled through ventilation of the seats, and ventilation systems generally need to be disposed in the seats. However, a ventilation system has high costs and generates large noise, affecting user experience.

KR 20110131885 A discloses a seat air conditioner for a vehicle for rapid heating by using heat generated from a battery through heat exchange medium. WO 2020184869 A1 discloses a thermal management system of a vehicle that supplies sufficient refrigerant to each air conditioning unit to cool heat each air conditioning area individually. CN 110816373 A discloses a cooling system of a vehicle-mounted seat, including an automatic rapid cooling system of the vehicle-mounted seat and a cooling method thereof.

### SUMMARY

This application provides a thermal management system and an electric vehicle, to implement effective control on a temperature of a seat. This satisfies a thermal comfort requirement of a user for an electric vehicle, and is conducive to reducing energy consumption of the electric vehicle.

According to a first aspect, this application provides a thermal management system. The thermal management system includes a battery water circuit and a seat water circuit. The battery water circuit includes a cooling water pump and a battery cooling/heating plate. The cooling water pump and the battery cooling/heating plate are connected through a cooling water pipe. In this application, the seat water circuit and the battery water circuit are disposed in parallel. During specific implementation, the seat water circuit has the liquid inlet end and the liquid outlet end. The liquid inlet end may be connected between a liquid outlet of the cooling water pump and a liquid inlet of the battery cooling/heating plate through the seat water pipe and the cooling water pipe, and the liquid outlet end may be connected between a liquid inlet of the cooling water pump and a liquid outlet of the battery cooling/heating plate through the seat water pipe and the cooling water pipe. The seat water circuit includes a seat heat exchange branch. Two ends of the seat heat exchange branch are respectively connected to a liquid inlet end and a liquid outlet end. The seat heat exchange branch includes a seat heat exchanger and a branch control valve. The seat heat exchanger and the branch control valve may be connected through a seat water pipe. In addition, the branch control valve may be disposed between the liquid inlet end and the seat heat exchanger. In this way, the cooling water pump may pump a liquid medium in a battery water pipe from the liquid inlet end of the seat water circuit into the seat water circuit. Because the branch control valve is disposed between the liquid inlet end and the seat heat exchanger, the branch control valve can control a liquid medium flowing into the seat heat exchanger, to control a temperature of the liquid medium in the seat heat exchanger. Moreover, a liquid medium in the seat water circuit may converge from the liquid outlet end at a point between the liquid outlet of the battery cooling/heating plate and the liquid inlet of the cooling water pump into the battery water circuit.

By using the thermal management system provided in this application, the seat water circuit can be cooled by using the battery water circuit, to improve energy efficiency of the thermal management system. In addition, in this application, the cooling water pump of the battery water circuit may be used as a power source for the liquid medium to enter the seat water circuit, to reuse power sources of the two water circuits. This can effectively reduce energy consumption, reduce noise, and improve user comfort.

In a possible implementation of this application, the battery water circuit may further include a first heat exchanger, where the first heat exchanger may be connected to the cooling water pump and the battery cooling/heating plate through the cooling water pipe, to cool a liquid medium flowing through the first heat exchanger. The cooled liquid medium may enter the battery cooling/heating plate to cool a battery.

In addition, a first directional control valve may be further disposed between the liquid inlet of the battery cooling/heating plate and the liquid outlet of the cooling water pump. When the first directional control valve is opened, the liquid medium pumped out by the cooling water pump may enter the battery cooling/heating plate, to cool the battery. When the battery does not need to be cooled, the first directional control valve may be closed, to prevent a liquid medium pumped out by the cooling water pump from entering the battery cooling/heating plate. The first directional control valve may be disposed to choose whether the liquid medium circulates in the battery water circuit, to control a cooling status of the battery, thereby implementing decoupling between cooling of the battery and cooling of a seat. This can effectively reduce energy consumption.

To measure a temperature at the seat heat exchanger, in a possible implementation of this application, the seat water circuit may further include a temperature sensor. The temperature sensor may be disposed inside the seat heat exchanger to be in direct contact with the liquid medium, or the temperature sensor is disposed outside the seat heat exchanger to be in indirect contact with the liquid medium, to measure the temperature of the liquid medium in the seat heat exchanger. The branch control valve may adjust, based on the temperature detected by the temperature sensor, the liquid medium flowing into the seat heat exchanger.

In a possible implementation of this application, a first heater may be further disposed in the seat water circuit, and the first heater may be disposed in the seat water pipe that is connected to the liquid inlet end and the battery water circuit. When the first heater is turned on, the liquid medium that enters the seat water circuit from the battery water circuit may be heated. With this design, not only the seat water circuit can be cooled by using the battery water circuit, but also the seat water circuit can be heated by using the battery water circuit. This can simplify a structure of the thermal management system, improve energy efficiency of the thermal management system, and reduce costs.

In a possible implementation of this application, the seat water circuit may further include a first main control valve, and the first main control valve may be disposed in the seat water pipe that is connected to the liquid inlet end and the battery water circuit. When the first main control valve is opened, the liquid medium pumped out by the cooling water pump may enter the seat water circuit. When the first main control valve is closed, the liquid medium pumped out by the cooling water pump may be prevented from entering the seat water circuit. In this way, whether the seat water circuit is cooled is controlled by using the first main control valve.

The thermal management system provided in this application may further heat the seat water circuit by using a heating water circuit. In a possible implementation of this application, the heating water circuit may be a passenger compartment heating water circuit. The passenger compartment heating water circuit may include a passenger compartment water pump and a first radiator, and the passenger compartment water pump is connected to the first radiator through a first hot water pipe.

The seat water circuit and the passenger compartment heating water circuit are disposed in parallel. During specific implementation, the liquid inlet end of the seat water circuit may be connected to a liquid inlet of the first radiator through the seat water pipe, and the liquid outlet end of the seat water circuit may be connected to a liquid outlet of the first radiator through the seat water pipe. In this way, when the seat water circuit has a heating requirement, a liquid medium pumped out by the passenger compartment water pump may enter the seat water circuit from the liquid inlet end, and the liquid medium flowing out of the seat water circuit may converge at the liquid outlet of the first radiator into the passenger compartment heating water circuit, so that the seat water circuit is heated by using the passenger compartment heating water circuit.

In a possible implementation of this application, the passenger compartment heating water circuit may further include a second heat exchanger, and the second heat exchanger may be connected to the passenger compartment water pump and the first radiator through the first hot water pipe, to heat a liquid medium flowing through the second heat exchanger, thereby satisfying heating requirements for a passenger compartment and the seat water circuit.

Moreover, a second heater may be further disposed in the passenger compartment heating water circuit to heat the liquid medium pumped out by the passenger compartment water pump. The second heater may be disposed between a liquid outlet of the passenger compartment water pump and the liquid inlet of the first radiator. However, this is not limited thereto.

A second directional control valve may be further disposed between the liquid inlet of the first radiator and the liquid outlet of the passenger compartment water pump. When the second directional control valve is opened, the liquid medium pumped out by the passenger compartment water pump may enter the first radiator, to dissipate heat to the passenger compartment by using the first radiator, thereby heating the passenger compartment. When the passenger compartment has no heating requirement, the second directional control valve is closed, to prevent the liquid medium pumped out by the passenger compartment water pump from entering the first radiator. The second directional control valve may be disposed to choose whether the liquid medium circulates in the passenger compartment heating water circuit, to control a heating status of the passenger compartment, thereby implementing decoupling between heating of the passenger compartment and heating of the seat. This can effectively reduce energy consumption.

In a possible implementation of this application, the seat water circuit may further include a second main control valve, and the second main control valve may be disposed in the seat water pipe that is connected to the liquid inlet end and the passenger compartment heating water circuit. When the second main control valve is opened, the liquid medium pumped out by the passenger compartment water pump may enter the seat water circuit. When the second main control valve is closed, the liquid medium pumped out by the passenger compartment water pump may be prevented from entering the seat water circuit. In this way, whether the seat water circuit is heated is controlled by using the second main control valve.

The thermal management system provided in this application may further include a motor water circuit, the motor water circuit may include a motor, a motor water pump, and a second radiator, and the motor, the motor water pump, and the second radiator are connected through a second hot water pipe. A liquid medium pumped out by the motor water pump may transfer residual heat generated by the motor to the second radiator, to dissipate heat of the liquid medium by using the second radiator, thereby implementing heat dissipation on the motor.

In a possible implementation of this application, the seat water circuit and the motor water circuit are disposed in parallel. During specific implementation, the liquid inlet end of the seat water circuit is connected to a liquid inlet of the second radiator through the seat water pipe, and the liquid outlet end is connected to a liquid outlet of the second radiator through the seat water pipe. In this way, the liquid medium pumped out by the motor water pump may enter the seat water circuit from the liquid inlet end, to heat the seat water circuit. The liquid medium flowing out of the liquid outlet end of the seat water circuit may converge at the liquid outlet of the second radiator into the motor water circuit, so that the seat water circuit is heated by using the motor water circuit. In this way, the residual heat of the motor is effectively utilized, thereby reducing energy consumption.

A third directional control valve may be further disposed between the liquid inlet of the second radiator and a liquid outlet of the motor water pump. When the third directional control valve is opened, the liquid medium pumped out by the motor water pump may enter the second radiator, so that the second radiator dissipates heat of the motor. When the motor has no heat dissipation requirement, the third directional control valve is closed, to prevent the liquid medium pumped out by the motor water pump from entering the second radiator. The third directional control valve may be disposed to choose whether the liquid medium circulates in the motor water circuit, to control a heat dissipation status of the motor, thereby implementing decoupling between heat dissipation of the motor and heating of the seat. This can effectively reduce energy consumption.

In a possible implementation of this application, the seat water circuit may further include a third main control valve, and the third main control valve may be disposed in the seat water pipe that is connected to the liquid inlet end and the motor water circuit. When the third main control valve is opened, the liquid medium pumped out by the motor water pump may enter the seat water circuit. When the third main control valve is closed, the liquid medium pumped out by the motor water pump may be prevented from entering the seat water circuit. In this way, whether the seat water circuit is heated by using the motor water circuit is controlled by using the third main control valve.

To avoid unnecessary heat exchange between the battery water circuit, the passenger compartment heating water circuit, and the motor water circuit, in a possible implementation of this application, an isolation valve may be disposed in the seat water pipe that is connected to the liquid outlet end of the seat water circuit and at least one of the battery water circuit, the passenger compartment heating water circuit, and the motor water circuit.

In some other possible implementations of this application, the motor water circuit may be configured to heat a liquid medium in the battery water circuit. During specific implementation, the motor water circuit and the first heat exchanger of the battery water circuit may be disposed in parallel. When the battery water circuit has a heating requirement, the first heat exchanger is closed, and the liquid medium in the battery water circuit is heated by using the motor water circuit. With this design, when the seat water circuit has a cooling requirement, the first heat exchanger may be turned on, and the cooling water pump may pump the liquid medium in the battery water circuit into the seat water circuit. When the seat water circuit has a heating requirement, the first heat exchanger is turned off, and the liquid medium in the battery water circuit is heated by using the motor water circuit, so that the liquid medium pumped out by the cooling water pump into the seat water circuit can implement heating on the seat water circuit. This can effectively simplify the structure of the thermal management system and recycle residual heat of the motor, thereby reducing energy consumption.

According to a second aspect, this application further provides an electric vehicle. The electric vehicle includes a seat and the thermal management system in the first aspect. The seat may include a frame, a foam layer, and a seat surface layer, and a seat heat exchanger is disposed between the foam layer and the seat surface layer. Because the seat may be in contact with hips of a passenger, the seat heat exchanger may be disposed at a part that is of the seat and that is in contact with the hips of the passenger, and a size of the seat heat exchanger may be set based on a contact area between the seat and the hips of the passenger. In addition, because the seat may also be in contact with a back of the passenger, the seat heat exchanger may also be disposed at a part that is of the seat and that is in contact with the back of the passenger, and a size of the seat heat exchanger may be set based on a contact area between the seat and the back of the passenger. This improves heat exchange efficiency between the seat and the passenger.

Cooling and/or heating of the seat of the electric vehicle provided in this application may be implemented through flowing of a liquid medium in a seat water circuit. A cooling source of the liquid medium may come from a battery water circuit, and a cooling source for cooling the liquid medium in the battery water circuit comes from a refrigerant. Energy efficiency of the refrigerant is high, and therefore the refrigerant can effectively reduce energy consumption during cooling. Likewise, when the liquid medium is heated, a heat source of the liquid medium may also come from a refrigerant or residual heat of a motor, so that an energy efficiency ratio can be improved and energy can be saved.

### BRIEF DESCRIPTION OF DRAWINGS

FIG. 1 is a schematic diagram of a structure of a seat according to an embodiment of this application;
FIG. 2 is a schematic diagram of a structure of a thermal management system according to an embodiment of this application;
FIG. 3 is a schematic diagram of a structure of a thermal management system according to another embodiment of this application;
FIG. 4 is a schematic diagram of a structure of a thermal management system according to another embodiment of this application;
FIG. 5 is a schematic diagram of a structure of a thermal management system according to another embodiment of this application;
FIG. 6 is a schematic diagram of a structure of a thermal management system according to another embodiment of this application;
FIG. 7 is a schematic diagram of a structure of a seat of an electric vehicle according to an embodiment of this application; and
FIG. 8 is a schematic diagram of a structure of a seat heat exchanger according to an embodiment of this application.

### REFERENCE NUMERALS:

1: frame; 2: foam layer; 3: seat surface layer; 4: heating pad; 7: battery water circuit; 701: cooling water pipe;
702: cooling water pump; 7021: liquid outlet; 7022: liquid inlet; 703: battery cooling/heating plate; 7031: liquid inlet; 7032: liquid outlet;
704: battery; 705: first heat exchanger; 706: directional control valve; 707: PTC heater; 8: seat water circuit;
801: seat heat exchanger; 802: temperature sensor; 803: temperature control valve; 804: liquid inlet end; 805: seat water pipe;
806a and 806b: directional control valves; 807: liquid outlet end; 808a, 808b, and 808c: temperature control valves; 809: directional control valve;
810a and 810b: isolation valves; 811: PTC heater; 9: passenger compartment heating water circuit; 901: first hot water pipe;
902: passenger compartment water pump; 9021: liquid outlet; 9022: liquid inlet; 903: first radiator; 9031: liquid inlet;
9032: liquid outlet; 904: blower; 905: second heat exchanger; 906: directional control valve; 907: PTC heater;
10: motor water circuit; 101: motor; 1011: liquid inlet; 1012: liquid outlet; 102: motor water pump; 1021: liquid outlet;
1022: liquid inlet; 103: second radiator; 1031: liquid inlet; 1032: liquid outlet; 104: second hot water pipe;
105: directional control valve; 11: three-way valve; 11a: first valve port; 11b: second valve port; and 11c: third valve port.

### DESCRIPTION OF EMBODIMENTS

To make objectives, technical solutions, and advantages of this application clearer, the following further describes this application in detail with reference to accompanying drawings. It should be noted that in descriptions of this application, "at least one" means one or more, and "a plurality of" means two or more. In view of this, in embodiments of this application, "a plurality of" may also be understood as "at least two". A term "and/or" describes an association relationship for describing associated objects and represents that three relationships may exist. For example, A and/or B may represent the following three cases: Only A exists, both A and B exist, and only B exists. In addition, a character "/" generally indicates an "or" relationship between the associated objects, unless otherwise specified. In addition, it should be understood that in the descriptions of this application, terms such as "first" and "second" are merely used for differentiation and description, but shall not be understood as an indication or implication of relative importance or an indication or implication of an order.

Reference to "an embodiment", "some embodiments", or the like described in this specification indicates that one or more embodiments of this application include a specific feature, structure, or characteristic described with reference to the embodiments. Therefore, in this specification, statements such as "in an embodiment", "in some embodiments", "in some other embodiments", and "in other embodiments" that appear at different places do not necessarily mean referring to a same embodiment, but mean "one or more but not all of the embodiments", unless otherwise specifically emphasized. Terms "include", "comprise", "have", and their variants all mean "including but not limited to", unless otherwise specifically emphasized.

For ease of understanding a thermal management system provided in embodiments of this application, the following describes an application scenario of the thermal management system. The thermal management system provided in embodiments of this application can be applied to an electric vehicle. At present, electric vehicles are more widely accepted by users because of their advantages such as energy conservation and environmental protection. With rapid development of the electric vehicles, the users impose higher requirements on the electric vehicles, among which a thermal comfort requirement in a driving process is more prominent.

However, controlling a temperature of a cockpit only by using an air conditioning system to satisfy a thermal comfort requirement of a user consumes high energy. This shortens an endurance mileage of an electric vehicle. Considering that a user's body is always in contact with a seat when the user drives an electric vehicle, a temperature-controlled seat is developed. An implementation principle of the temperature-controlled seat is to control thermal comfort of the seat through heating, cooling, ventilation, or the like.

A temperature-controlled seat design may be used to adjust a temperature of the seat, to transfer heat from the seat to the user, thereby improving comfort of the user. In this way, when the seat is cooled (or ventilated) in hot weather, the user does not sweat due to a muggy fabric material of the seat. When the seat is heated in cold weather, a surface of the seat maintains a high temperature, so that the user feels warm.

Transferring heat from the seat to the user can effectively reduce energy consumption of a cooling/heating system. Heating of the seat is used as an example. According to a related literature, when the seat transfers heat to a person within a specific temperature range, the person's tolerance to cold is increased, and vice versa. Transferring heat from the seat to the person is generally more efficient than heating the air by using an air conditioning system. Therefore, a cooling/heating requirement of the person can be satisfied more efficiently by configuring a cooling or heating function for the seat, so that energy consumption of the air conditioning system is reduced. This is of great significance for an electric vehicle.

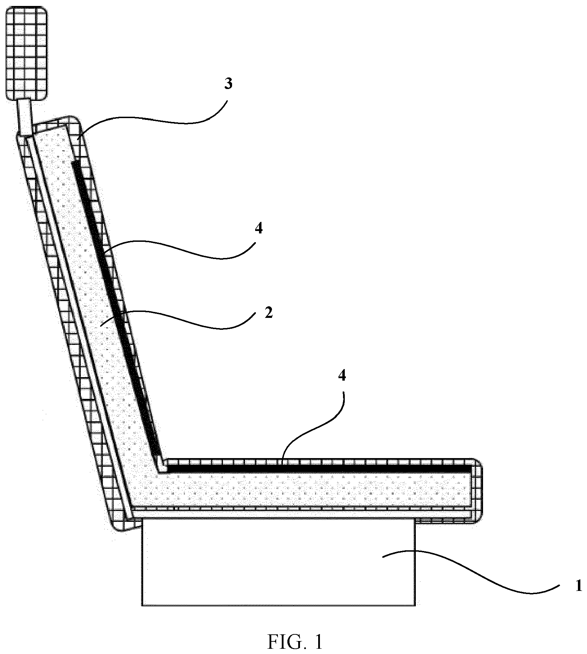

FIG. 1 is a schematic diagram of a structure of a seat with a heating function. The seat may generally include a frame 1, a foam layer 2, and a seat surface layer 3. The frame 1 can function as a support, and a material of the frame 1 may be but is not limited to metal having high structural strength, such as steel, or may be non-metal. The foam layer 2 is disposed between the frame 1 and the seat surface layer 3, and may be made of a material which can be elastically deformed to some extent, thereby producing a specific cushioning effect.

In addition, the heating function of the seat is mainly implemented by adding a heating pad 4 to an interlayer of the seat. For example, in the embodiment shown in FIG. 1, the heating pad 4 may be disposed between the seat surface layer 3 and the foam layer 2. In some other embodiments, the heating pad 4 may alternatively be disposed at the seat surface layer 3 to improve efficiency of transferring heat by the heating pad 4 to a user.

A surface of the seat surface layer 3 of the seat may be made of a porous material, for example, a leather or woven material, so that the seat can be cooled through ventilation. To implement ventilation of the seat, usually, the seat further needs to be provided with a ventilation channel, a fan, and the like, which are complex in structure and high in costs. Moreover, in a scenario in which weather is hot, it is quite difficult to satisfy a cooling requirement of the user only through ventilation. In some other embodiments, a seat cooler may be further disposed to cool an air flow after the air flow passes through the seat cooler, to achieve a cooling purpose. However, this further increases costs of the seat, resulting in high costs of an electric vehicle.

The thermal management system provided in this application is intended to resolve the foregoing problems, to implement effective control of a temperature of the seat by reusing an existing cooling water circuit and/or an existing heating water circuit in the electric vehicle. This satisfies a thermal comfort requirement of the user for the electric vehicle, and is conducive to reducing energy consumption of the electric vehicle, thereby reducing costs.

A battery of the electric vehicle is usually in a continuous working state in a driving process. To ensure working efficiency of the battery, currently, a battery water circuit is usually disposed in the electric vehicle, to dissipate heat of the battery. It should be noted that in this application, a liquid medium flowing in the water circuit is an aqueous solution of an antifreeze, and a meaning of adding the antifreeze is to reduce a freezing point (0 degrees) of water and increase a boiling point.

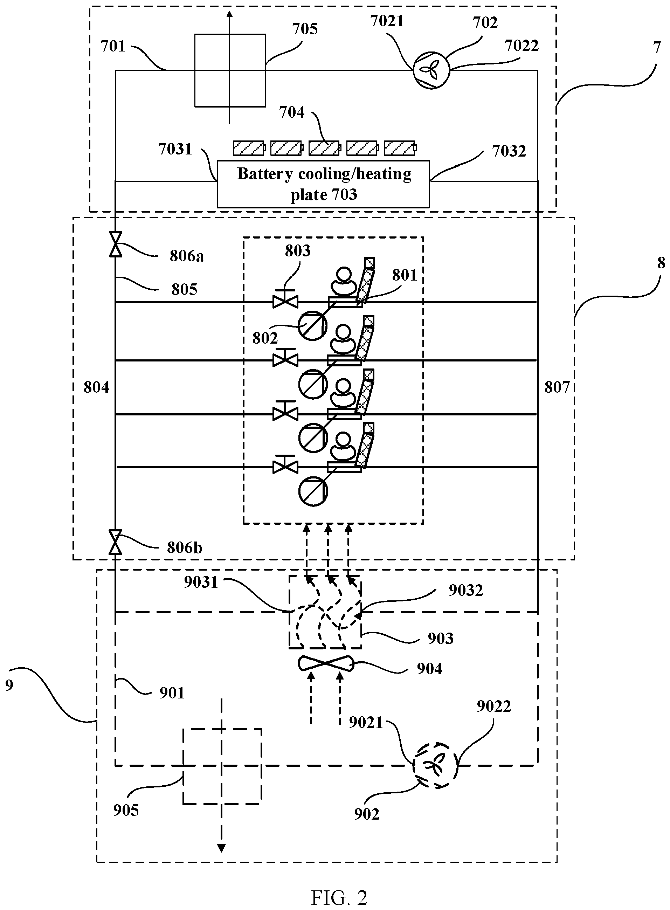

Based on this, in this application, the seat can be cooled by using the battery water circuit. During specific implementation, refer to FIG. 2. FIG. 2 is a schematic diagram of a structure of a thermal management system according to an embodiment of this application. In this embodiment, the thermal management system may include a battery water circuit 7 and a seat water circuit 8. The battery water circuit 7 may include a cooling water pipe 701, a cooling water pump 702, and a battery cooling/heating plate 703. The cooling water pipe 701 may be used as a channel through which a liquid medium (not shown in the figure) flows, and components in the battery water circuit 7 may be connected through the cooling water pipe 701. For example, the cooling water pump 702 and the battery cooling/heating plate 703 may be connected through the cooling water pipe 701. The cooling water pump 702 may be used as a power source for the liquid medium to flow in the battery water circuit 7. The battery cooling/heating plate 703 may be in contact with a battery 704. Heat generated by the battery 704 may be transferred to the battery water circuit 7 through the battery cooling/heating plate 703, and the heat is diffused through circulation of the liquid medium in the battery water circuit 7, to dissipate the heat of the battery 704.

Still referring to FIG. 2, the battery water circuit 7 may further include a first heat exchanger (chiller) 705, and an arrow in the first heat exchanger 705 indicates a refrigerant pipe. Heat exchange may be performed between the liquid medium in the cooling water pipe 701 and a refrigerant in the refrigerant pipe, so that a temperature of the liquid medium can satisfy a cooling requirement. It should be noted that the refrigerant may flow in a direction indicated by the arrow, or may flow in a direction opposite to the direction indicated by the arrow. This is not specifically limited in this application.

The first heat exchanger 705 may be connected to the cooling water pump 702 and the battery cooling/heating plate 703 through the cooling water pipe 701. In addition, a specific location of the first heat exchanger 705 in the battery water circuit 7 is not limited in this application. For example, in the embodiment shown in FIG. 2, the first heat exchanger 705 may be disposed between a liquid outlet 7021 of the cooling water pump 702 and a liquid inlet 7031 of the battery cooling/heating plate 703, so that the liquid medium pumped out by the cooling water pump 702 is first cooled through heat exchange with the refrigerant at the first heat exchanger 705, and then enters the battery water circuit 7 for circulation. In some other embodiments of this application, the first heat exchanger 705 may alternatively be disposed between a liquid inlet 7022 of the cooling water pump 702 and a liquid outlet 7032 of the battery cooling/heating plate 703, provided that the first heat exchanger 705 can cool the liquid medium flowing through the first heat exchanger 705.

It can be understood that not all components (for example, an expansion tank) in the battery water circuit 7 are shown in FIG. 2, and only key components that can implement the circulation of the liquid medium in the battery water circuit 7 are illustrated. Moreover, a layout of the components in the battery water circuit 7 is not limited to that shown in FIG. 2, provided that respective functions of the components can be implemented.

The seat water circuit 8 may include a plurality of seat heat exchange branches, and two ends of each seat heat exchange branch are respectively connected to a liquid inlet end 804 and a liquid outlet end 807 of the seat water circuit 8. In the embodiment shown in FIG. 2, the seat water circuit 8 includes four seat heat exchange branches. In other possible embodiments, there may alternatively be two, three, five, six, or more seat heat exchange branches. In some other embodiments, there may alternatively be one seat heat exchange branch.

Still referring to FIG. 2, a plurality of seat heat exchange branches may be disposed in parallel. A seat heat exchanger 801 may be disposed in each seat heat exchange branch. The seat heat exchanger 801 is mainly configured to transfer a liquid medium in the corresponding seat heat exchange branch to a user, and absorb heat of the user, to implement heat exchange between the liquid medium and the user.

It should be noted that sizes of the seat heat exchangers 801 disposed in all the seat heat exchange branches may be identical or different. The sizes of the seat heat exchangers 801 may be specifically designed based on heat exchange requirements for the corresponding seat heat exchange branches.

Referring to FIG. 2, in a possible embodiment of this application, a temperature sensor 802 may be further disposed in the seat heat exchange branch. The temperature sensor 802 may be configured to measure a temperature of the liquid medium in the seat heat exchanger 801. A specific location for disposing the temperature sensor 802 is not limited in this application. For example, the temperature sensor 802 may be disposed inside or outside a pipe of the seat heat exchanger 801 or may be disposed at another location, provided that the temperature of the liquid medium in the seat heat exchanger 801 can be collected.

In some embodiments of this application, a branch control valve may be further disposed in the seat heat exchange branch, and the branch control valve may be configured to control a temperature at a location of the seat heat exchanger 801. The branch control valve may be a temperature control valve 803, and the temperature control valve 803 may be disposed between the liquid inlet end 804 of the seat water circuit 8 and the seat heat exchanger 801. In this embodiment, the temperature control valve 803 may be a ratio control valve, and controls a ratio of the ratio control valve to control a flow rate of the liquid medium entering the seat heat exchanger 801. Alternatively, the temperature control valve 803 is a directional control valve, and controls on or off of the directional control valve to control whether a liquid medium enters the seat heat exchanger 801. In this embodiment, the temperature at the location of the seat heat exchanger 801 may be adjusted by configuring the temperature control valve 803 as the branch control valve, thereby satisfying different thermal comfort requirements of the user. This is conducive to improving user experience.

In addition, the temperature control valve 803 may further control, based on the temperature measured by the temperature sensor 802, the flow rate of the liquid medium entering the seat heat exchanger 801 or whether a liquid medium enters the seat heat exchanger 801, to ensure that the temperature of the liquid medium in the seat heat exchanger 801 can satisfy a cooling requirement.

Still referring to FIG. 2, the seat water circuit 8 may further include a seat water pipe 805. Components in the seat water circuit 8 may be connected through the seat water pipe 805. For example, the seat heat exchanger 801 and the temperature control valve 803 may be connected through the seat water pipe 805.

To cool the seat by using the battery water circuit 7, in a possible embodiment of this application, the seat water circuit 8 and the battery water circuit 7 may be disposed in parallel through the seat water pipe 805. During specific implementation, the battery cooling/heating plate 703 has the liquid inlet 7031 and the liquid outlet 7032, and the liquid medium in the battery water circuit 7 may enter the battery cooling/heating plate 703 through the liquid inlet 7031 and flow out of the battery cooling/heating plate 703 through the liquid outlet 7032. The liquid inlet end 804 of the seat water circuit 8 may be connected between the liquid outlet 7021 of the cooling water pump 702 and the liquid inlet 7031 of the battery cooling/heating plate 703 through the seat water pipe 805 and the cooling water pipe 701. In addition, the liquid outlet end 807 of the seat water circuit 8 may be connected between the liquid inlet 7022 of the cooling water pump 702 and the liquid outlet 7032 of the battery cooling/heating plate 703 through the seat water pipe 805 and the cooling water pipe 701. In a possible embodiment of this application, the liquid inlet 7031 and the liquid outlet 7032 of the battery cooling/heating plate 703 may be respectively disposed at two ends of the battery cooling/heating plate 703 that are disposed facing away from each other. This can facilitate a connection between the seat water circuit 8 and the battery water circuit 7.

It can be understood that liquid mediums in the battery water circuit 7 and the seat water circuit 8 are the same, and the liquid medium may be but is not limited to an ethylene glycol solution with a concentration of 50%.

Still referring to FIG. 2, the seat water circuit 8 may further include a first main control valve. The first main control valve may be a directional control valve 806a, and the 806a may be disposed in the seat water pipe 805 between the liquid inlet end 804 of the seat water circuit 8 and the liquid inlet 7031 of the battery cooling/heating plate 703. When the seat water circuit 8 has a cooling requirement, the directional control valve 806a is opened, and the liquid medium pumped out by the cooling water pump 702 is pumped from the liquid inlet end 804 of the seat water circuit 8 into the seat water circuit 8. The liquid medium is divided into a plurality of paths of liquid mediums after passing through the directional control valve 806a, and the plurality of paths of liquid mediums enter the seat heat exchange branches, respectively. After flowing through the temperature control valve 803 and the seat heat exchanger 801 in the seat heat exchange branch, the liquid medium flows out of the liquid outlet end 807 of the seat water circuit 8, and finally converges at a point between the liquid outlet 7032 of the battery cooling/heating plate 703 and the liquid inlet 7022 of the cooling water pump into the battery water circuit 7.

It can be understood that in the embodiment shown in FIG. 2, the cooling water pump 702 may further circulate the liquid medium in the battery water circuit 7 while pumping the liquid medium into the seat water circuit 8, to cool the battery 704.

When the seat water circuit 8 has no cooling requirement, the directional control valve 806a is closed, to prevent the liquid medium pumped out by the cooling water pump 702 from entering the seat water circuit 8. In this case, the cooling water pump 702 drives the liquid medium in the battery water circuit 7 to circulate only in the battery water circuit 7, to dissipate the heat of the battery 704.

By using the thermal management system provided in this application, the seat water circuit 8 can be cooled by using the battery water circuit 7, to improve energy efficiency of the thermal management system, and reduce costs. In addition, in this application, the cooling water pump 702 of the battery water circuit 7 may be used as a power source for the liquid medium to enter the seat water circuit 8, to reuse power sources of the two water circuits. This can effectively reduce energy consumption, reduce noise, and improve user comfort.

It can be learned from the descriptions of the foregoing embodiments that the seat can be heated by disposing a heating pad. A heating function of the seat is implemented by disposing the heating pad. In a possible embodiment of this application, the seat may alternatively be heated by inputting a heated liquid medium into the seat water circuit 8.

Still referring to FIG. 2, in some possible embodiments of this application, the thermal management system may further include a heating water circuit. For example, the heating water circuit may be a passenger compartment heating water circuit 9. Based on the descriptions of cooling the seat water circuit 8 by using the battery water circuit 7, it can be understood that in this application, the seat water circuit 8 may also be heated by using the passenger compartment heating water circuit 9.

The passenger compartment heating water circuit 9 may include a first hot water pipe 901 and a passenger compartment water pump 902. The first hot water pipe 901 may be used as a channel through which a liquid medium flows. Components in the passenger compartment heating water circuit 9 may be connected through the first hot water pipe 901. The passenger compartment water pump 902 may be used as a power source for the liquid medium to flow in the passenger compartment heating water circuit 9.

In some embodiments of this application, the passenger compartment heating water circuit 9 may further include a first radiator 903, and the first radiator 903 may include a liquid inlet 9031 and a liquid outlet 9032. The liquid medium in the passenger compartment heating water circuit 9 may enter the first radiator 903 through the liquid inlet 9031 and flow out of the first radiator 903 through the liquid outlet 9032, so that heat of the liquid medium can be transferred to a passenger compartment through the first radiator 903. In addition, to improve heat exchange efficiency of the first radiator 903, a blower 904 may be further disposed near the first radiator 903, so that the blower 904 is used in cooperation with the first radiator 903. In this case, the heat of the liquid medium at a location of the first radiator 903 is transferred to the passenger compartment by using wind blown out by the blower 904.

Still referring to FIG. 2, the passenger compartment heating water circuit 9 may further include a second heat exchanger 905. The second heat exchanger 905 may be disposed between a liquid outlet 9021 of the passenger compartment water pump 902 and the liquid inlet 9031 of the first radiator 903, or may be disposed between a liquid inlet 9022 of the passenger compartment water pump 902 and the liquid outlet 9032 of the first radiator 903. An arrow in the second heat exchanger 905 indicates a refrigerant pipe. Heat exchange may be performed between the liquid medium flowing through the second heat exchanger 905 and a refrigerant in the refrigerant pipe, so that the liquid medium flowing through the second heat exchanger 905 is heated, and a temperature of the liquid medium in the passenger compartment heating water circuit 9 can satisfy a heating requirement. It should be noted that the refrigerant may flow in a direction indicated by the arrow, or may flow in a direction opposite to the direction indicated by the arrow. This is not specifically limited in this application.

It can be understood that not all components (for example, an expansion tank) of the passenger compartment heating water circuit 9 are shown in FIG. 2, and only key components that can implement circulation of the liquid medium in the passenger compartment heating water circuit 9 are illustrated. Moreover, a layout of the components in the passenger compartment heating water circuit 9 is not limited to that shown in FIG. 2, provided that respective functions of the components can be implemented.

Referring to FIG. 2, in a possible embodiment of this application, the seat water circuit 8 and the passenger compartment heating water circuit 9 may be connected in parallel when the seat water circuit 8 is heated by using the passenger compartment heating water circuit 9. During specific implementation, the liquid inlet end 804 of the seat water circuit 8 is connected to the liquid inlet 9031 of the first radiator 903 through the seat water pipe 805, so that the liquid inlet end 804 and the first hot water pipe 901 are connected at the liquid inlet 9031 of the first radiator 903. In addition, the liquid outlet end 807 of the seat water circuit 8 is connected to the liquid outlet 9032 of the first radiator 903 through the seat water pipe 805, so that the liquid outlet end 807 and the first hot water pipe 901 are connected at the liquid outlet 9032 of the first radiator 903.

It can be understood that liquid mediums in the passenger compartment heating water circuit 9 and the seat water circuit 8 are the same, and the liquid medium may be but is not limited to an ethylene glycol solution with a concentration of 50%. In addition, according to the descriptions of the foregoing embodiments, the liquid medium in the battery water circuit 7 may also be the same as the liquid medium in the seat water circuit 8. In this case, in a possible embodiment of this application, the liquid mediums in the battery water circuit 7, the passenger compartment heating water circuit 9, and the seat water circuit 8 can be made the same.

Still referring to FIG. 2, the seat water circuit 8 may further include a second main control valve. The second main control valve may be a directional control valve 806b, and the directional control valve 806b may be disposed in the seat water pipe 805 between the liquid inlet end 804 of the seat water circuit 8 and the liquid inlet 9031 of the first radiator 903. When the seat water circuit 8 has a heating requirement, the directional control valve 806b is opened, and the passenger compartment water pump 902 pumps the liquid medium from the liquid inlet end 804 of the seat water circuit 8 into the seat water circuit 8. The liquid medium is divided into a plurality of paths of liquid mediums after passing through the directional control valve 806b, and the plurality of paths of liquid mediums enter the seat heat exchange branches, respectively. After flowing through the temperature control valve 802 and the seat heat exchanger 801 in the seat heat exchange branch, the liquid medium finally converges at the liquid outlet 9032 of the first radiator 903 into the passenger compartment heating water circuit 9.

It can be understood that in the embodiment shown in FIG. 2, the passenger compartment water pump 902 may further circulate the liquid medium in the passenger compartment heating water circuit 9 while pumping the liquid medium into the seat water circuit 8, to heat the passenger compartment by using the first radiator 903.

When the seat water circuit 8 has no heating requirement, the directional control valve 806b is closed, to prevent the liquid medium pumped out by the passenger compartment water pump 902 from entering the seat water circuit 8. In this case, the passenger compartment water pump 902 drives the liquid medium in the passenger compartment heating water circuit 9 to circulate only in the passenger compartment heating water circuit 9.

By using the thermal management system provided in this application, the seat water circuit 8 can be cooled by using the battery water circuit 7, and the seat water circuit 8 can be heated by using the passenger compartment heating water circuit 9, to effectively improve energy efficiency of the thermal management system, and reduce costs. In addition, in this application, the cooling water pump 702 of the battery water circuit 7 and the passenger compartment water pump 902 of the passenger compartment heating water circuit 9 may respectively provide power sources for the liquid mediums in the corresponding water circuits to enter the seat water circuit 8, to reuse power sources of the battery water circuit 7 and the seat water circuit 8 and power sources of the passenger compartment heating water circuit 9 and the seat water circuit 8. This can effectively reduce energy consumption, reduce noise, and improve user comfort.

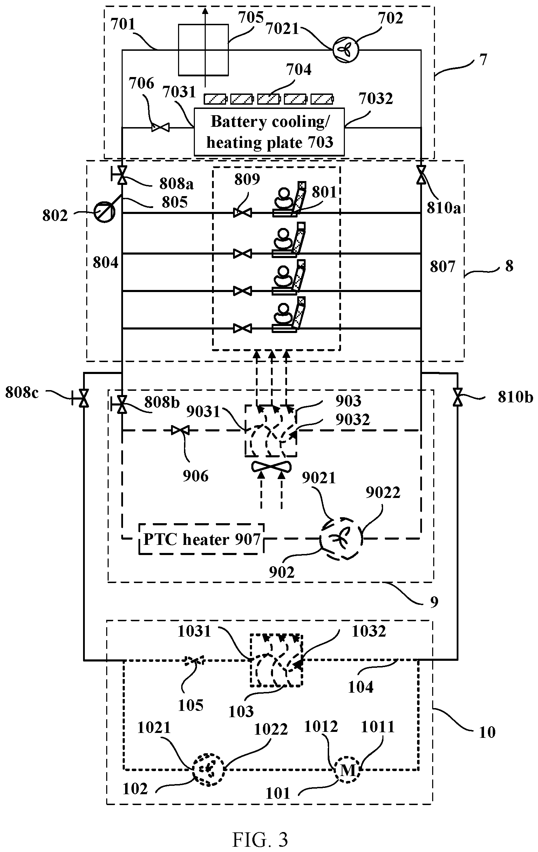

FIG. 3 is a schematic diagram of a structure of a thermal management system according to another embodiment of this application. In this embodiment, a directional control valve 706 may be further disposed in a battery water circuit 7. The directional control valve 706 may be disposed between a liquid inlet 7031 of a battery cooling/heating plate 703 and a liquid outlet 7021 of a cooling water pump 702, to control a liquid medium entering the battery cooling/heating plate 703. For example, when a battery 704 has no cooling requirement, the directional control valve 706 is closed, to prevent the liquid medium pumped out by the cooling water pump 702 from entering the battery cooling/heating plate 703. When the battery 704 has a cooling requirement, the directional control valve 706 is opened, and the liquid medium pumped out by the cooling water pump 702 enters the battery cooling/heating plate 703. In this way, whether the liquid medium circulates in the battery water circuit 7 can be chosen, to control a cooling status of the battery 704, thereby implementing decoupling between cooling of the battery and cooling of a seat.

Moreover, in this embodiment, for a first main control valve of a seat water circuit 8, the directional control valve 806a shown in FIG. 2 is replaced with a temperature control valve 808a. The temperature control valve 808a may be a ratio control valve, and controls a ratio of the ratio control valve to control a flow rate of the liquid medium that enters the seat water circuit 8 from the battery water circuit 7. Alternatively, the temperature control valve 808a is a directional control valve, and controls on or off of the directional control valve to control whether a liquid medium enters the seat water circuit 8, thereby adjusting a temperature of the seat water circuit 8. A temperature of a main path of the seat water circuit 8 may be adjusted by configuring the temperature control valve 808a as the first main control valve of the seat water circuit 8, to control a temperature of a liquid medium entering each seat heat exchange branch, thereby satisfying different thermal comfort requirements of a user. This is conducive to improving user experience.

Still referring to FIG. 3, in a possible embodiment of this application, for a branch control valve in the seat heat exchange branch, the temperature control valve 803 in the embodiment shown in FIG. 2 is replaced with a directional control valve 809. It can be understood that in this embodiment, the directional control valve 809 of each seat heat exchange branch may be opened to enable the liquid medium pumped out by the cooling water pump 702 to enter a seat heat exchanger 801, to cool the seat heat exchange branch. A temperature of each seat heat exchange branch may be controlled by the temperature control valve 808a, so that a process of controlling the temperature of each seat heat exchange branch can be effectively simplified. In addition, in this embodiment of this application, a quantity of disposed temperature sensors 802 may be further reduced. For example, a temperature sensor 802 may be disposed only on the main path of the seat water circuit 8 (a seat water pipe 805 that is connected to a liquid inlet end 804 of the seat water circuit 8 and the battery water circuit 7). The temperature control valve 808a may adjust the temperature of the entire seat water circuit 8 by using the temperature sensor 802, to simplify the structure of the thermal management system.

In the embodiment shown in FIG. 3, a directional control valve 906 may be further disposed in a passenger compartment heating water circuit 9. The directional control valve 906 may be disposed between a liquid outlet 9021 of a passenger compartment water pump 902 and a liquid inlet 9031 of a first radiator 903, to control a liquid medium entering the first radiator 903. For example, the directional control valve 906 is closed when the first radiator 903 does not need to be used to heat a passenger compartment. The directional control valve 906 is opened when the first radiator 903 is used to heat a passenger compartment. This can implement decoupling between heating of the passenger compartment and heating of the seat.

Moreover, in the embodiment shown in FIG. 3, for a second main control valve of the seat water circuit 8, the directional control valve 806b shown in FIG. 2 is replaced with a temperature control valve 808b. The temperature control valve 808b may be a ratio control valve, and controls a ratio of the ratio control valve to control a flow rate of the liquid medium that enters the seat water circuit 8 from the passenger compartment heating water circuit 9. Alternatively, the temperature control valve 808b is a directional control valve, and controls on or off of the directional control valve to control whether a liquid medium enters the seat water circuit 8, thereby adjusting the temperature of the seat water circuit 8. The temperature of the main path of the seat water circuit 8 may be adjusted by configuring the temperature control valve 808b as the second main control valve of the seat water circuit 8, to control the temperature of the liquid medium entering each seat heat exchange branch, thereby satisfying different thermal comfort requirements of the user. This is conducive to improving user experience.

In this embodiment of this application, when the seat water circuit 8 is heated by using the passenger compartment heating water circuit 9, the directional control valve 809 of each seat heat exchange branch may be opened to heat the seat heat exchange branch. The temperature of each seat heat exchange branch may be controlled by the temperature control valve 808b by using the temperature sensor 802 disposed on the main path of the seat water circuit 8. This can effectively reduce a quantity of disposed temperature sensors 802, reduce costs, and control the temperature of the seat water circuit simply and reliably. It can be understood that in this embodiment of this application, when the temperature sensor 802 is disposed on the main path of the seat water circuit 8, the temperature sensor 802 may be disposed in the seat water pipe 805 that is connected to the liquid inlet end 804 of the seat water circuit 8 and the battery water circuit 7 and that is shown in FIG. 3, or may be disposed in a seat water pipe 805 that is connected to the liquid inlet end 804 of the seat water circuit 8 and the passenger compartment heating water circuit 9, provided that a temperature of a liquid medium at the liquid inlet end 804 of the seat water circuit 8 can be measured.

Because heaters are used as heat sources for heating passenger compartments in a large quantity of electric vehicles at present, in some other embodiments of this application, the second heat exchanger 905 in the embodiment shown in FIG. 2 may be replaced with a heater in the passenger compartment heating water circuit 9. The heater may be, for example, a positive temperature coefficient (positive temperature coefficient, PTC) heater, so that the thermal management system provided in this application is adaptable to more scenarios.

Referring to FIG. 3, a PTC heater 907 may be disposed between the liquid outlet 9021 of the passenger compartment water pump 902 and the liquid inlet 9031 of the first radiator 903, or may be disposed between a liquid inlet 9022 of the passenger compartment water pump 902 and a liquid outlet 9032 of a first radiator 903. The PTC heater 907 may be configured to heat a liquid medium flowing through the PTC heater 907. This is conducive to satisfying heating requirements for the passenger compartment heating water circuit 9 and the seat water circuit 8.

To reduce mutual impact between the battery water circuit 7 and the passenger compartment heating water circuit 9, still referring to FIG. 3, in some embodiments of this application, an isolation valve 810a may be further disposed in the seat water pipe 805 that is connected to a liquid outlet end 807 of the seat water circuit 8 and the battery water circuit 7. The isolation valve 810a may be closed in a process of heating the seat water circuit 8 by using the passenger compartment heating water circuit 9, to prevent the liquid medium flowing out of the seat water circuit 8 from entering the battery water circuit 7, thereby avoiding unnecessary heat transfer. In this way, heat of the battery 704 is effectively dissipated by using the battery water circuit 7.

In some other embodiments of this application, an isolation valve may alternatively be disposed in the seat water pipe 805 that is connected to a liquid outlet end 807 of the seat water circuit 8 and the passenger compartment heating water circuit 9. The isolation valve may be closed in a process of cooling the seat water circuit 8 by using the battery water circuit 7, to prevent the liquid medium flowing out of the seat water circuit 8 from entering the passenger compartment heating water circuit 9, thereby avoiding unnecessary heat transfer. In this way, the seat water circuit 8 is effectively heated by using the passenger compartment heating water circuit 9.

Still referring to FIG. 3, in some embodiments of this application, the thermal management system may further include a motor water circuit 10. The motor water circuit 10 may include a motor 101 and a motor water pump 102. The motor water pump 102 may be used as a power source for a liquid medium to flow in the motor water circuit 10, and may be configured to circulate the liquid medium in the motor water circuit 10, thereby cooling the motor 101. In some other embodiments of this application, the liquid medium in the motor water circuit 10 may be heated through active heating of the motor 101 to provide more heat.

In addition, the motor water circuit 10 may further include a second radiator 103. The second radiator 103 may be disposed between a liquid outlet 1021 of the motor water pump 102 and a liquid inlet 1011 of the motor 101, or the second radiator 103 is disposed between a liquid inlet 1022 of the motor water pump 102 and a liquid outlet 1012 of the motor 101. The second radiator 103 may be configured to diffuse heat of the liquid medium in the motor water circuit 10 into an environment, to cool the liquid medium, so that the liquid medium flowing through the second radiator 103 can satisfy a cooling requirement for the motor 101.

It can be understood that components in the motor water circuit 10 may be connected through a second hot water pipe 104. Not all components (for example, an expansion tank) of the motor water circuit 10 are shown in FIG. 3, and only key components that can implement circulation of the liquid medium in the motor water circuit 10 are illustrated. Moreover, a layout of the components in the motor water circuit 10 is not limited to that shown in FIG. 3, provided that respective functions of the components can be implemented.

Because the motor 101 generates a large amount of heat during work, a temperature of the liquid medium in the motor water circuit 10 is high. In a possible embodiment of this application, the seat water circuit 8 may be further heated by using the motor water circuit 10. During specific implementation, the motor water circuit 10 and the seat water circuit 8 may be connected in parallel. In the embodiment shown in FIG. 3, the liquid inlet end 804 of the seat water circuit 8 is connected to a liquid inlet 1031 of the second radiator 103, so that the liquid inlet end 804 of the seat water circuit 8 is connected to the second hot water pipe 104 at the liquid inlet 1031 of the second radiator 103 through the seat water pipe 805. The liquid outlet end 807 of the seat water circuit 8 is connected to a liquid outlet 1032 of the second radiator 103, so that the liquid outlet end 807 of the seat water circuit 8 is connected to the second hot water pipe 104 at the liquid outlet 1032 of the second radiator 103 through the seat water pipe 805.

In addition, a third main control valve may be further disposed in the seat water pipe 805 that is connected to the liquid inlet end 804 of the seat water circuit 8 and the motor water circuit 10. The third main control valve may be, for example, a temperature control valve 808c. The temperature control valve 808c may be a ratio control valve, and controls a ratio of the ratio control valve to control a flow rate of the liquid medium that enters the seat water circuit 8 from the motor water circuit 10. Alternatively, the temperature control valve 808c may be a directional control valve, and controls on or off of the directional control valve to control whether a liquid medium enters the seat water circuit 8, thereby adjusting the temperature of the seat water circuit 8. The temperature of the main path of the seat water circuit 8 may be adjusted by configuring the temperature control valve 808c as the third main control valve of the seat water circuit 8, to control the temperature of the liquid medium entering each seat heat exchange branch, thereby satisfying different thermal comfort requirements of the user. This is conducive to improving user experience.

It can be understood that in some embodiments of this application, the third main control valve may alternatively be a directional control valve. When the third main control valve is opened, the liquid medium pumped out by the motor water pump 102 may enter the seat water circuit 8. When the third main control valve is closed, the liquid medium pumped out by the motor water pump 102 may be prevented from entering the seat water circuit 8. This simplifies a control mode of the third main control valve.

Still referring to FIG. 3, in a possible embodiment, a directional control valve 105 may be further disposed in the motor water circuit 10. The directional control valve 105 may be disposed between the liquid outlet 1021 of the motor water pump 102 and the liquid inlet 1031 of the second radiator 103, to control the liquid medium entering the second radiator 103. For example, in an application scenario in which an ambient temperature is low in winter, the directional control valve 105 may be closed in this case, to prevent the liquid medium pumped out by the motor water pump 102 from entering the second radiator 103. The liquid medium heated by the motor 101 may enter the seat water circuit 8 through the temperature control valve 808c. This can effectively implement decoupling between cooling of the motor 101 and heating of the seat, and is conducive to recycling residual heat of the motor 101. In addition, when a heat dissipation requirement for the motor 101 cannot be satisfied only through natural heat dissipation, the directional control valve 105 may be opened. In this case, the liquid medium pumped out by the motor water pump 102 may enter the second radiator 103, thereby improving heat dissipation efficiency of the motor 101 by using the second radiator 103.

To reduce mutual impact between the motor water circuit 10 and the battery water circuit 7, still referring to FIG. 3, in some embodiments of this application, an isolation valve 810b may be further disposed between the liquid outlet end 807 of the seat water circuit 8 and the liquid outlet 1032 of the second radiator 103. The isolation valve 810b may be closed in a process of cooling the seat water circuit 8 by using the battery water circuit 7, to prevent the liquid medium flowing out of the seat water circuit 8 from entering the motor water circuit 10, thereby avoiding unnecessary heat transfer.

Structures of other parts of the thermal management system in the embodiment shown in FIG. 3 may be set based on the foregoing embodiments. Details are not described herein again.

By using the thermal management system provided in this embodiment of this application, the seat water circuit 8 can be cooled by using the battery water circuit 7, and the seat water circuit 8 can be heated by using the passenger compartment heating water circuit 9 and/or the motor water circuit 10, to effectively improve energy efficiency of the thermal management system. In addition, in this application, the cooling water pump 702 of the battery water circuit 7, the passenger compartment water pump 902 of the passenger compartment heating water circuit 9, and the motor water pump 102 of the motor water circuit 10 may respectively provide power sources for the liquid mediums in the corresponding water circuits to enter the seat water circuit 8, to reuse power sources of the battery water circuit 7 and the seat water circuit 8, power sources of the passenger compartment heating water circuit 9 and the seat water circuit 8, and power sources of the motor water circuit 10 and the seat water circuit 8. This can effectively reduce energy consumption, reduce noise, and improve user comfort.

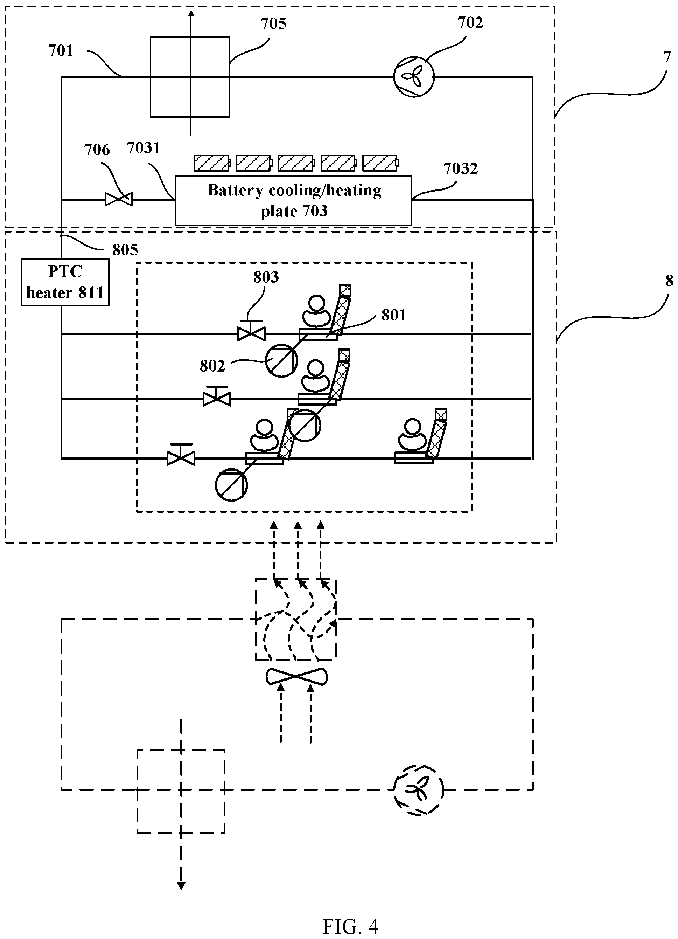

FIG. 4 is a schematic diagram of a structure of a thermal management system according to another embodiment of this application. This embodiment differs from the embodiment shown in FIG. 2 mainly in that, the seat water circuit 8 is connected in parallel only to the battery water circuit 7 and has no connection relationship with the passenger compartment heating water circuit 9. In addition, the directional control valve 806a on the seat water pipe 805 that is connected to the liquid inlet end 804 of the seat water circuit 8 and the liquid inlet 7031 of the battery cooling/heating plate 703 is replaced with a heater, and the heater may be a PTC heater 811.

It can be understood that, with the design in this embodiment, a liquid medium in the battery water circuit 7 may enter the seat water circuit 8 after being heated by the PTC heater 811, to heat the seat water circuit 8. When the seat water circuit 8 has a cooling requirement, the PTC heater 811 may be turned off, so that the seat water circuit 8 is cooled by using the battery water circuit 7. In this embodiment, the seat water circuit 8 can be heated or cooled by using one water circuit, that is, the battery water circuit 7. This can effectively simplify the structure of the thermal management system.

In the embodiment shown in FIG. 4, to decouple the battery water circuit 7 from the seat water circuit 8, a directional control valve 706 may be disposed between a cooling water pump 702 of the battery water circuit 7 and the liquid inlet 7031 of the battery cooling/heating plate 703. In this case, on of the directional control valve 706 is controlled to make the liquid medium circulate in the battery water circuit 7. In addition, the directional control valve 706 may be closed to prevent circulation of the liquid medium in the battery water circuit 7.

Moreover, three seat heat exchange branches are shown in FIG. 4. Two seats are connected in series in one seat heat exchange branch, and the two seats may share one seat heat exchanger 801; or one seat heat exchanger 801 is separately disposed corresponding to each seat, and in this case, two seat heat exchangers 801 are disposed in series. Regardless of which design manner is used for the seat heat exchange branch, a temperature of the seat heat exchange branch can be controlled by one temperature control valve 803 and one temperature sensor 802.

Structures of other parts of the thermal management system in the embodiment shown in FIG. 4 may be set based on the foregoing embodiments. Details are not described herein again.

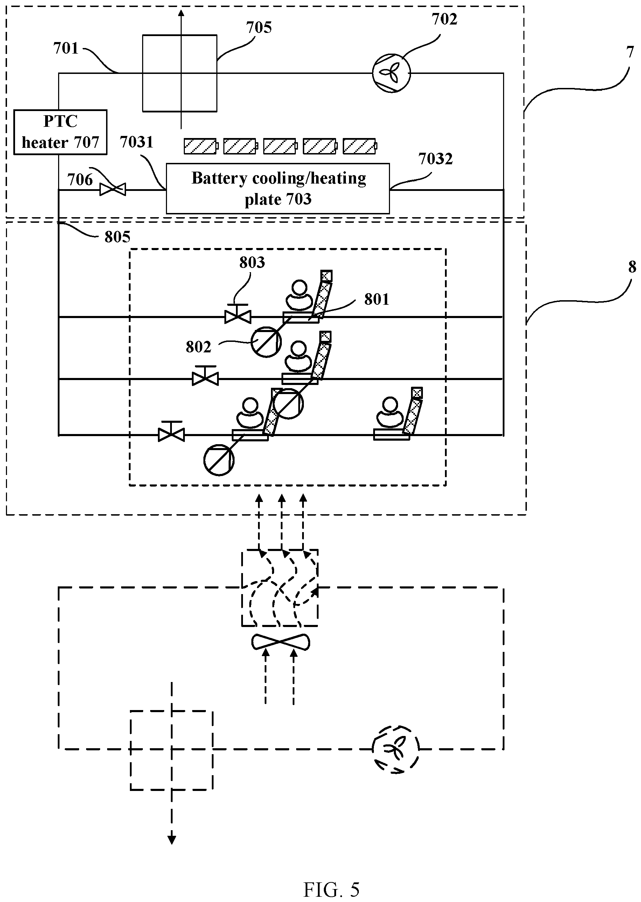

In some application scenarios of this application, for example, in a scenario in which a temperature of a battery is excessively low in winter, the battery also has a heating requirement. Then, a PTC heater 707 may be disposed in the battery water circuit 7. The PTC heater 707 may heat the liquid medium in the battery water circuit 7. In this case, the thermal management system may use a structural design shown in FIG. 5. In this embodiment, the PTC heater 707 may be multiplexed for heating the battery water circuit 7 and the seat water circuit 8. This can effectively simplify the structure of the thermal management system and can increase application scenarios of the thermal management system.

In another possible implementation of this application, an air conditioning system of the thermal management system is a heat pump air conditioning system. In this embodiment, neither the battery water circuit 7 nor the seat water circuit 8 may be provided with a PTC heater, but the battery water circuit 7 and/or the seat water circuit 8 are/is heated by absorbing heat at a first heat exchanger 705 by using a liquid medium.

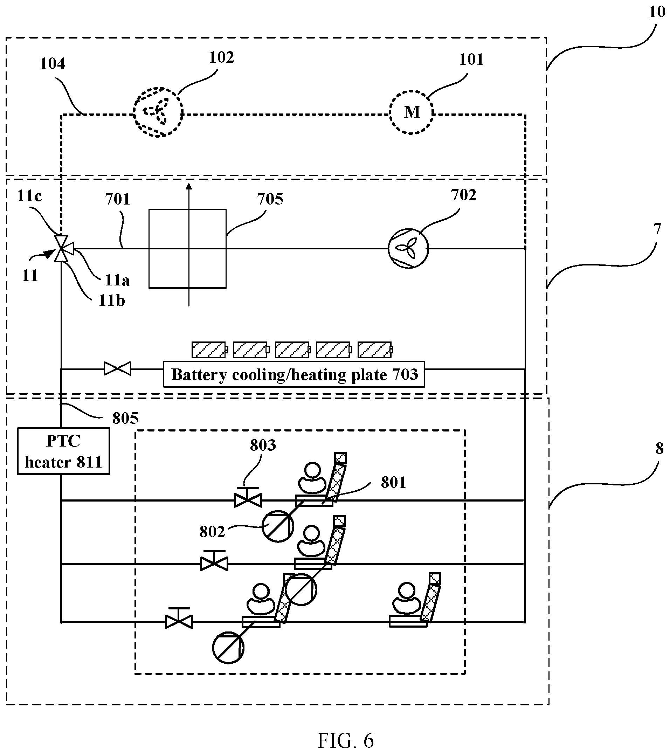

FIG. 6 is a schematic diagram of a structure of a thermal management system according to another embodiment of this application. In this embodiment, a battery water circuit 7 may be heated by using a motor water circuit 10. During specific implementation, the motor water circuit 10 and the battery water circuit 7 may be disposed in parallel. As shown in FIG. 6, a first heat exchanger 705 may be connected to the battery water circuit 7 through a three-way valve 11, and the three-way valve 11 includes a first valve port 11a, a second valve port 11b, and a third valve port 11c. The first heat exchanger 705 is connected to the first valve port 11a, the second valve port 11b is connected to other components (for example, a battery cooling/heating plate 703 or a cooling water pump 702) of the battery water circuit 7 through a cooling water pipe 701, and the motor water circuit 10 is connected to the third valve port 11c through a second hot water pipe 104.

When a seat water circuit 8 has a cooling requirement, the first valve port 11a and the second valve port 11b are connected, a liquid medium in the battery water circuit 7 is cooled through the first heat exchanger 705 by using a refrigerant, and the cooled liquid medium may enter the seat water circuit 8, to cool the seat water circuit 8. When a seat water circuit 8 has a heating requirement, the second valve port 11b and the third valve port 11c are connected, the liquid medium in the battery water circuit 7 is actively heated by using the motor water circuit 10, and then the liquid medium enters the seat water circuit 8, so that the seat water circuit 8 is heated by using the motor water circuit 10.

It should be noted that, by using the design manner shown in FIG. 6, connections between different water circuits may be implemented by switching connection states between different valve ports of the three-way valve 11. This can effectively simplify the structure of the thermal management system. On this basis, some valves (for example, a main control valve) in the thermal management systems in FIG. 2 to FIG. 5 may be further replaced with the three-way valve by using proper designs, to simplify the thermal management system. It should be understood that such replacements fall within the protection scope of this application.

Still referring to FIG. 6, in this embodiment, a PTC heater 811 may be further disposed in the seat water circuit 8. In this way, the PTC heater 811 may be turned on when the liquid medium heated by a motor 101 cannot satisfy the heating requirement for the seat water circuit 8.

It can be understood that the connection relationship between the motor water circuit 10 and the battery water circuit 7 shown in FIG. 6 is merely an example to describe heating of the liquid medium in the battery water circuit 7 by using the motor water circuit 10. In some embodiments of this application, another possible connection manner may be used based on a specific manner of disposing the motor water circuit 10 and the battery water circuit 7, provided that the liquid medium in the battery water circuit 7 can be heated by using the motor water circuit 10. It should be understood that the another possible connection manner falls within the protection scope of this application.

By using the thermal management system provided in this application, the cooling or heating requirement for the seat water circuit 8 can be satisfied through flowing of the liquid medium in the seat water circuit 8. A cooling source of the liquid medium may come from the battery water circuit 7, and a cooling source for cooling the liquid medium in the battery water circuit 7 comes from a refrigerant. Energy efficiency of the refrigerant is high, and therefore the refrigerant can effectively reduce energy consumption during cooling. Likewise, when the liquid medium is heated, a heat source of the liquid medium may also come from a refrigerant or residual heat of the motor, so that an energy efficiency ratio can be improved and energy can be saved.

After the thermal management system provided in this application is known, the following describes a specific manner of disposing the thermal management system on an electric vehicle.

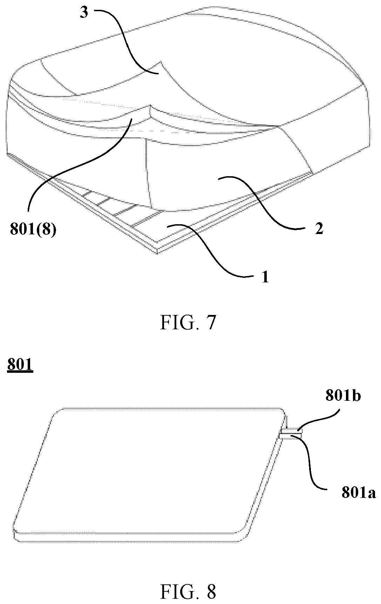

FIG. 7 is a schematic diagram of a structure of a seat of an electric vehicle according to an embodiment of this application. The seat may include but is not limited to a frame 1, a foam layer 2, and a seat surface layer 3. The frame 1 can function as a support, and the seat heat exchanger 801 of the seat water circuit 8 of the thermal management system in the foregoing embodiments may be disposed between the foam layer 2 and the seat surface layer 3. The seat surface layer 3 may be made of a soft waterproof material (for example, PVC).

In a possible embodiment of this application, FIG. 8 is a schematic diagram of a structure of a seat heat exchanger 801 according to an embodiment of this application. The seat heat exchanger 801 has a pipe joint 801a and a pipe joint 801b respectively disposed corresponding to a liquid inlet end 804 and a liquid outlet end 807 of a seat water circuit. A liquid medium in a water circuit (the battery water circuit 7, the passenger compartment heating water circuit 9, or the motor water circuit 10) for cooling or heating the seat water circuit 8 in the thermal management system may enter the seat heat exchanger 801 through the pipe joint 801a and return to the corresponding water circuit through the pipe joint 801b.

It can be understood that a size of the seat heat exchanger 801 may be adjusted based on a contact area between a seat and a human body. For example, an area of the seat heat exchanger 801 may be greater than or equal to the contact area between the seat and the human body, so that heat exchange efficiency between the seat heat exchanger 801 and the human body can be improved.

In addition, each seat heat exchange branch of the seat water circuit 8 may be corresponding to a row of seats of an electric vehicle, so that a temperature of each row of seats is controlled by using one seat heat exchange branch. This is convenient to dispose the seat water circuit 8 in the electric vehicle. Because a rear row of seats of the electric vehicle may be usually configured as bench seats, a long seat heat exchanger 801 may be disposed in the rear row of seats, so that cooling or heating of the rear row of seats can be controlled uniformly, thereby effectively simplifying a structure of the seat water circuit 8. This is convenient to dispose the seat water circuit 8 in the electric vehicle.

Still referring to FIG. 7, it can be understood that the seat heat exchanger 801 not only can be disposed at a part that is of the seat and that is in contact with hips of the human body, but also can be disposed at a part that is of the seat and that is in contact with a back of the human body, to increase a contact area between the seat and the human body, thereby improving heat exchange efficiency between the seat and the human body. Moreover, regardless of a location of the seat heat exchanger 801 disposed at the seat, for a specific manner of disposing the seat heat exchanger 801, refer to the foregoing embodiments. Details are not described herein again.

The electric vehicle in this application may use the thermal management system in any one of the foregoing embodiments, to cool or heat the seat through flowing of the liquid medium in the seat water circuit 8. With a same quantity of seats configured, costs of the electric vehicle in this application are significantly reduced, and heating or cooling efficiency of the electric vehicle is significantly improved. Furthermore, noise of the electric vehicle in this application is not obvious.

In summary, in the electric vehicle provided in this application, a cooling or heating requirement for the seat can be satisfied through flowing of the liquid medium in the seat water circuit 8. A cooling source of the liquid medium may come from the battery water circuit 7, and a cooling source for cooling the liquid medium in the battery water circuit 7 comes from a refrigerant. Energy efficiency of the refrigerant is high, and therefore the refrigerant can effectively reduce energy consumption during cooling. Likewise, when the liquid medium is heated, a heat source of the liquid medium may also come from a refrigerant or residual heat of a motor, so that an energy efficiency ratio can be improved, energy can be saved, and the costs of the electric vehicle can be reduced.

The foregoing descriptions are merely specific implementations of this application, but are not intended to limit the protection scope of this application. Any variation or replacement readily figured out by a person skilled in the art within the technical scope disclosed in this application shall fall within the protection scope of this invention, as long as they remain within the scope of the claims which define the invention.

## Claims

1. A thermal management system, comprising a battery water circuit (7) and a seat water circuit (8), wherein
the battery water circuit (7) comprises a cooling water pump (702) and a battery cooling/heating plate (703), wherein the cooling water pump and the battery cooling/heating plate are connected through a cooling water pipe (701); and
the seat water circuit has a liquid inlet end (804) and a liquid outlet end (807), **characterized in that** the liquid inlet end is connected between a liquid outlet (7021) of the cooling water pump and a liquid inlet (7031) of the battery cooling/heating plate through a seat water pipe (805) and the cooling water pipe, the liquid outlet end is connected between a liquid inlet (7022) of the cooling water pump and a liquid outlet (7032) of the battery cooling/heating plate through the seat water pipe and the cooling water pipe, the cooling water pump pumps a liquid medium in the battery water circuit from the liquid inlet end into the seat water circuit, and a liquid medium in the seat water circuit converges from the liquid outlet end into the battery water circuit; and
the seat water circuit comprises a seat heat exchange branch, wherein two ends of the seat heat exchange branch are respectively connected to the liquid inlet end and the liquid outlet end, the seat heat exchange branch comprises a seat heat exchanger (801) and a branch control valve, and the branch control valve is disposed between the liquid inlet end and the seat heat exchanger and is configured to control a temperature of a liquid medium in the seat heat exchanger.

2. The thermal management system according to claim 1, wherein the battery water circuit (7) further comprises a first heat exchanger (705); the first heat exchanger, the cooling water pump, and the battery cooling/heating plate are connected through the cooling water pipe; and the first heat exchanger is configured to cool a liquid medium flowing through the first heat exchanger.

3. The thermal management system according to claim 2, wherein the battery water circuit (7) further comprises a first directional control valve (706), and the first directional control valve is disposed between the liquid inlet of the battery cooling/heating plate and the liquid outlet of the cooling water pump; and
when the first directional control valve is opened, a liquid medium pumped out by the cooling water pump (702) enters the battery cooling/heating plate; or when the first directional control valve is closed, a liquid medium pumped out by the cooling water pump is prevented from entering the battery cooling/heating plate (703).

4. The thermal management system according to any one of claims 1 to 3, wherein the seat heat exchange branch further comprises a temperature sensor (802), and the temperature sensor is configured to measure the temperature of the liquid medium in the seat heat exchanger.

5. The thermal management system according to any one of claims 1 to 4, wherein the seat water circuit (8) further comprises a first heater, and the first heater is disposed in the seat water pipe that is connected to the liquid inlet end and the battery water circuit (7).

6. The thermal management system according to any one of claims 1 to 4, wherein the seat water circuit (8) further comprises a first main control valve, and the first main control valve is disposed in the seat water pipe (805) that is connected to the liquid inlet end and the battery water circuit (7); and
when the first main control valve is opened, the liquid medium pumped out by the cooling water pump enters the seat water circuit; or when the first main control valve is closed, the liquid medium pumped out by the cooling water pump is prevented from entering the seat water circuit (8).

7. The thermal management system according to any one of claims 1 to 6, wherein the thermal management system further comprises a passenger compartment heating water circuit (9), the passenger compartment heating water circuit comprises a passenger compartment water pump (9021) and a first radiator (903), and the passenger compartment water pump is connected to the first radiator through a first hot water pipe; and
the liquid inlet end is connected to a liquid inlet of the first radiator through the seat water pipe, and the liquid outlet end is connected to a liquid outlet of the first radiator through the seat water pipe.

8. The thermal management system according to claim 7, wherein the passenger compartment heating water circuit (9) further comprises a second heat exchanger; the second heat exchanger, the passenger compartment water pump, and the first radiator are connected through the first hot water pipe; and the second heat exchanger is configured to heat a liquid medium flowing through the second heat exchanger.

9. The thermal management system according to claim 7, wherein the passenger compartment heating water circuit (9) further comprises a second heater; the second heater, the passenger compartment water pump, and the first radiator are connected through the first hot water pipe; and the second heater is configured to heat a liquid medium flowing through the second heater.

10. The thermal management system according to any one of claims 7 to 9, wherein the passenger compartment heating water circuit (9) further comprises a second directional control valve, and the second directional control valve is disposed between the liquid inlet of the first radiator and a liquid outlet of the passenger compartment water pump; and
when the second directional control valve is opened, a liquid medium pumped out by the passenger compartment water pump (9) enters the first radiator; or when the second directional control valve is closed, a liquid medium pumped out by the passenger compartment water pump is prevented from entering the first radiator.

11. The thermal management system according to any one of claims 7 to 10, wherein the seat water circuit (8) further comprises a second main control valve, and the second main control valve is disposed in the seat water pipe that is connected to the liquid inlet end and the passenger compartment heating water circuit (9); and
when the second main control valve is opened, the liquid medium pumped out by the passenger compartment water pump enters the seat water circuit; or when the second main control valve is closed, the liquid medium pumped out by the passenger compartment water pump is prevented from entering the seat water circuit.

12. The thermal management system according to any one of claims 1 to 11, wherein the thermal management system further comprises a motor water circuit (10), the motor water circuit comprises a motor (101), a motor water pump (102), and a second radiator, and the motor, the motor water pump, and the second radiator are connected through a second hot water pipe; and
the liquid inlet end is connected to a liquid inlet of the second radiator through the seat water pipe, and the liquid outlet end is connected to a liquid outlet of the second radiator through the seat water pipe.

13. The thermal management system according to claim 12, wherein the motor water circuit (10) further comprises a third directional control valve, and the third directional control valve is disposed between the liquid inlet of the second radiator and a liquid outlet of the motor water pump; and
when the third directional control valve is opened, a liquid medium pumped out by the motor water pump enters the second radiator; or when the third directional control valve is closed, a liquid medium pumped out by the motor water pump is prevented from entering the second radiator.

14. The thermal management system according to claim 12 or 13, wherein the seat water circuit (8) further comprises a third main control valve, and the third main control valve is disposed in the seat water pipe that is connected to the liquid inlet end and the motor water circuit; and
when the third main control valve is opened, the liquid medium pumped out by the motor water pump enters the seat water circuit; or when the third main control valve is closed, the liquid medium pumped out by the motor water pump is prevented from entering the seat water circuit.

15. The thermal management system according to any one of claims 12 to 14, wherein an isolation valve is disposed in the seat water pipe that is connected to the liquid outlet end and at least one of the battery water circuit, the passenger compartment heating water circuit (9), or the motor water circuit (10).

16. The thermal management system according to any one of claims 2 to 6, wherein the thermal management system further comprises a motor water circuit, and the motor water circuit is connected in parallel to the first heat exchanger and is configured to heat the liquid medium in the battery water circuit.

17. An electric vehicle, comprising a seat and the thermal management system according to any one of claims 1 to 16, wherein the seat comprises a frame, a foam layer, and a seat surface layer, and the seat heat exchanger is disposed between the foam layer and the seat surface layer.

## Patentansprüche

1. Wärmemanagementsystem, das einen Batteriewasserkreislauf (7) und einen Sitzwasserkreislauf (8) umfasst, wobei
der Batteriewasserkreislauf (7) eine Kühlwasserpumpe (702) und eine Batteriekühl-/Heizplatte (703) umfasst, wobei die Kühlwasserpumpe und die Batteriekühl-/Heizplatte über eine Kühlwasserleitung (701) verbunden sind, und
der Sitzwasserkreislauf ein Flüssigkeitseinlassende (804) und ein Flüssigkeitsauslassende (807) aufweist, **dadurch gekennzeichnet, dass** das Flüssigkeitseinlassende zwischen einem Flüssigkeitsauslass (7021) der Kühlwasserpumpe und einem Flüssigkeitseinlass (7031) der Batteriekühl-/Heizplatte über eine Sitzwasserleitung (805) und die Kühlwasserleitung verbunden ist, das Flüssigkeitsauslassende zwischen einem Flüssigkeitseinlass (7022) der Kühlwasserpumpe und einem Flüssigkeitsauslass (7032) der Batteriekühl-/Heizplatte über die Sitzwasserleitung und die Kühlwasserleitung verbunden ist, die Kühlwasserpumpe ein flüssiges Medium in dem Batteriewasserkreislauf von dem Flüssigkeitseinlassende in den Sitzwasserkreislauf pumpt und ein flüssiges Medium in dem Sitzwasserkreislauf aus dem Flüssigkeitsauslassende in den Batteriewasserkreislauf zusammenfließt; und
der Sitzwasserkreislauf einen Sitzwärmeaustauschzweig umfasst, wobei zwei Enden des Sitzwärmeaustauschzweigs mit dem Flüssigkeitseinlassende bzw. dem Flüssigkeitsauslassende verbunden sind, der Sitzwärmeaustauschzweig einen Sitzwärmetauscher (801) und ein Zweigsteuerventil umfasst und das Zweigsteuerventil zwischen dem Flüssigkeitseinlassende und dem Sitzwärmetauscher angeordnet ist und konfiguriert ist, eine Temperatur eines flüssigen Mediums in dem Sitzwärmetauscher zu steuern.

2. Wärmemanagementsystem nach Anspruch 1, wobei der Batteriewasserkreislauf (7) ferner einen ersten Wärmetauscher (705) umfasst, der erste Wärmetauscher, die Kühlwasserpumpe und die Batteriekühl-/Heizplatte über die Kühlwasserleitung verbunden sind, und der erste Wärmetauscher konfiguriert ist, ein flüssiges Medium, das durch den ersten Wärmetauscher fließt, zu kühlen.

3. Wärmemanagementsystem nach Anspruch 2, wobei der Batteriewasserkreislauf (7) ferner ein erstes Richtungssteuerventil (706) umfasst und das erste Richtungssteuerventil zwischen dem Flüssigkeitseinlass der Batteriekühl-/Heizplatte und dem Flüssigkeitsauslass der Kühlwasserpumpe angeordnet ist, und
wenn das erste Richtungssteuerventil geöffnet ist, ein durch die Kühlwasserpumpe (702) abgepumptes flüssiges Medium in die Batteriekühl-/Heizplatte eintritt; oder wenn das erste Richtungssteuerventil geschlossen ist, verhindert wird, dass ein durch die Kühlwasserpumpe abgepumptes flüssiges Medium in die Batteriekühl-/Heizplatte (703) eintritt.

4. Wärmemanagementsystem nach einem der Ansprüche 1 bis 3, wobei der Sitzwärmeaustauschzweig ferner einen Temperatursensor (802) umfasst und der Temperatursensor konfiguriert ist, die Temperatur des flüssigen Mediums im Sitzwärmetauscher zu messen.

5. Wärmemanagementsystem nach einem der Ansprüche 1 bis 4, wobei der Sitzwasserkreislauf (8) ferner ein erstes Heizelement umfasst und das erste Heizelement in der Sitzwasserleitung, die mit dem Flüssigkeitseinlassende und dem Batteriewasserkreislauf (7) verbunden ist, angeordnet ist.

6. Wärmemanagementsystem nach einem der Ansprüche 1 bis 4, wobei der Sitzwasserkreislauf (8) ferner ein erstes Hauptsteuerventil umfasst und das erste Hauptsteuerventil in der Sitzwasserleitung (805), die mit dem Flüssigkeitseinlassende und dem Batteriewasserkreislauf (7) verbunden ist, angeordnet ist, und
wenn das erste Hauptsteuerventil geöffnet ist, das durch die Kühlwasserpumpe abgepumpte flüssige Medium in den Sitzwasserkreislauf eintritt; oder wenn das erste Hauptsteuerventil geschlossen ist, verhindert wird, dass das durch die Kühlwasserpumpe abgepumpte flüssige Medium in den Sitzwasserkreislauf (8) eintritt.

7. Wärmemanagementsystem nach einem der Ansprüche 1 bis 6, wobei das Wärmemanagementsystem ferner einen Fahrgastraum-Heizwasserkreislauf (9) umfasst, wobei der Fahrgastraum-Heizwasserkreislauf eine Fahrgastraum-Wasserpumpe (9021) und einen ersten Radiator (903) umfasst und die Fahrgastraum-Wasserpumpe mit dem ersten Radiator über eine erste Warmwasserleitung verbunden ist, und
das Flüssigkeitseinlassende mit einem Flüssigkeitseinlass des ersten Radiators über die Sitzwasserleitung verbunden ist und das Flüssigkeitsauslassende mit einem Flüssigkeitsauslass des ersten Radiators über die Sitzwasserleitung verbunden ist.

8. Wärmemanagementsystem nach Anspruch 7, wobei der Fahrgastraum-Heizwasserkreislauf (9) ferner einen zweiten Wärmetauscher umfasst, der zweite Wärmetauscher, die Fahrgastraum-Wasserpumpe und der erste Radiator über die erste Warmwasserleitung verbunden sind, und der zweite Wärmetauscher konfiguriert ist, ein flüssiges Medium, das durch den zweiten Wärmetauscher fließt, zu erwärmen.

9. Wärmemanagementsystem nach Anspruch 7, wobei der Fahrgastraum-Heizwasserkreislauf (9) ferner ein zweites Heizelement umfasst, das zweite Heizelement, die Fahrgastraum-Wasserpumpe und der erste Radiator über die erste Warmwasserleitung verbunden sind, und das zweite Heizelement konfiguriert ist, ein flüssiges Medium, das durch das zweite Heizelement fließt, zu erwärmen.

10. Wärmemanagementsystem nach einem der Ansprüche 7 bis 9, wobei der Fahrgastraum-Heizwasserkreislauf (9) ferner ein zweites Richtungssteuerventil umfasst und das zweite Richtungssteuerventil zwischen dem Flüssigkeitseinlass des ersten Radiators und einem Flüssigkeitsauslass der Fahrgastraum-Wasserpumpe angeordnet ist, und
wenn das zweite Richtungssteuerventil geöffnet ist, ein durch die Fahrgastraum-Wasserpumpe (9) abgepumptes flüssiges Medium in den ersten Radiator eintritt; oder wenn das zweite Richtungssteuerventil geschlossen ist, verhindert wird, dass ein durch die Fahrgastraum-Wasserpumpe abgepumptes flüssiges Medium in den ersten Radiator eintritt.

11. Wärmemanagementsystem nach einem der Ansprüche 7 bis 10, wobei der Sitzwasserkreislauf (8) ferner ein zweites Hauptsteuerventil umfasst und das zweite Hauptsteuerventil in der Sitzwasserleitung, die mit dem Flüssigkeitseinlassende und dem Fahrgastraum-Heizwasserkreislauf (9) verbunden ist, angeordnet ist, und
wenn das zweite Hauptsteuerventil geöffnet ist, das durch die Fahrgastraum-Wasserpumpe abgepumpte flüssige Medium in den Sitzwasserkreislauf eintritt; oder wenn das zweite Hauptsteuerventil geschlossen ist, verhindert wird, dass das durch die Fahrgastraum-Wasserpumpe abgepumpte flüssige Medium in den Sitzwasserkreislauf eintritt.

12. Wärmemanagementsystem nach einem der Ansprüche 1 bis 11, wobei das Wärmemanagementsystem ferner einen Motorwasserkreislauf (10) umfasst, der Motorwasserkreislauf einen Motor (101), eine Motorwasserpumpe (102) und einen zweiten Radiator umfasst und der Motor, die Motorwasserpumpe und der zweite Radiator über eine zweite Warmwasserleitung verbunden sind, und
das Flüssigkeitseinlassende mit einem Flüssigkeitseinlass des zweiten Radiators über die Sitzwasserleitung verbunden ist und das Flüssigkeitsauslassende mit einem Flüssigkeitsauslass des zweiten Radiators über die Sitzwasserleitung verbunden ist.

13. Wärmemanagementsystem nach Anspruch 12, wobei der Motorwasserkreislauf (10) ferner ein drittes Richtungssteuerventil umfasst und das dritte Richtungssteuerventil zwischen dem Flüssigkeitseinlass des zweiten Radiators und einem Flüssigkeitsauslass der Motorwasserpumpe angeordnet ist, und
wenn das dritte Richtungssteuerventil geöffnet ist, ein durch die Motorwasserpumpe abgepumptes flüssiges Medium in den zweiten Radiator eintritt; oder wenn das dritte Richtungssteuerventil geschlossen ist, verhindert wird, dass ein durch die Motorwasserpumpe abgepumptes flüssiges Medium in den zweiten Radiator eintritt.

14. Wärmemanagementsystem nach Anspruch 12 oder 13, wobei der Sitzwasserkreislauf (8) ferner ein drittes Hauptsteuerventil umfasst und das dritte Hauptsteuerventil in der Sitzwasserleitung, die mit dem Flüssigkeitseinlassende und dem Motorwasserkreislauf verbunden ist, angeordnet ist, und
wenn das dritte Hauptsteuerventil geöffnet ist, das durch die Motorwasserpumpe abgepumpte flüssige Medium in den Sitzwasserkreislauf eintritt; oder wenn das dritte Hauptsteuerventil geschlossen ist, verhindert wird, dass das durch die Motorwasserpumpe abgepumpte flüssige Medium in den Sitzwasserkreislauf eintritt.

15. Wärmemanagementsystem nach einem der Ansprüche 12 bis 14, wobei ein Absperrventil in der Sitzwasserleitung, die mit dem Flüssigkeitsauslassende und wenigstens einem aus dem Batteriewasserkreislauf, dem Fahrgastraum-Heizwasserkreislauf (9) oder dem Motorwasserkreislauf (10) verbunden ist, angeordnet ist.

16. Wärmemanagementsystem nach einem der Ansprüche 2 bis 6, wobei das Wärmemanagementsystem ferner einen Motorwasserkreislauf umfasst und der Motorwasserkreislauf parallel zu dem ersten Wärmetauscher verbunden ist und konfiguriert ist, das flüssige Medium in dem Batteriewasserkreislauf zu erwärmen.

17. Elektrofahrzeug, das einen Sitz und das Wärmemanagementsystem nach einem der Ansprüche 1 bis 16 umfasst, wobei der Sitz einen Rahmen, eine Schaumstoffschicht und eine Sitzoberflächenschicht umfasst und der Sitzwärmetauscher zwischen der Schaumstoffschicht und der Sitzoberflächenschicht angeordnet ist.

## Revendications

1. Système de gestion thermique, comportant un circuit (7) d'eau de batterie et un circuit (8) d'eau de sièges, le circuit (7) d'eau de batterie comportant une pompe (702) à eau de refroidissement et une plaque (703) de refroidissement/chauffage de batterie, la pompe à eau de refroidissement et la plaque de refroidissement/chauffage de batterie étant reliées par l'intermédiaire d'un tuyau (701) d'eau de refroidissement ; et
le circuit d'eau de sièges présentant une extrémité (804) d'entrée de liquide et une extrémité (807) de sortie de liquide, **caractérisé en ce que** l'extrémité d'entrée de liquide est raccordée entre une sortie (7021) de liquide de la pompe à eau de refroidissement et une entrée (7031) de liquide de la plaque de refroidissement/chauffage de batterie par l'intermédiaire d'un tuyau (805) d'eau de sièges et du tuyau d'eau de refroidissement, l'extrémité de sortie de liquide est raccordée entre une entrée (7022) de liquide de la pompe à eau de refroidissement et une sortie (7032) de liquide de la plaque de refroidissement/chauffage de batterie par l'intermédiaire du tuyau d'eau de sièges et du tuyau d'eau de refroidissement, la pompe à eau de refroidissement pompe un milieu liquide dans le circuit d'eau de batterie depuis l'extrémité d'entrée de liquide jusque dans le circuit d'eau de sièges, et un milieu liquide dans le circuit d'eau de sièges converge depuis l'extrémité de sortie de liquide jusque dans le circuit d'eau de batterie ; et
le circuit d'eau de sièges comportant une branche d'échange de chaleur de sièges, deux extrémités de la branche d'échange de chaleur de sièges étant respectivement reliées à l'extrémité d'entrée de liquide et à l'extrémité de sortie de liquide, la branche d'échange de chaleur de sièges comportant un échangeur (801) de chaleur de sièges et une vanne de régulation de branche, et la vanne de régulation de branche étant disposée entre l'extrémité d'entrée de liquide et l'échangeur de chaleur de sièges et étant configurée pour réguler une température d'un milieu liquide dans l'échangeur de chaleur de sièges.

2. Système de gestion thermique selon la revendication 1, le circuit (7) d'eau de batterie comportant en outre un premier échangeur (705) de chaleur ; le premier échangeur de chaleur, la pompe à eau de refroidissement, et la plaque de refroidissement/chauffage de batterie étant reliés par l'intermédiaire du tuyau d'eau de refroidissement ; et le premier échangeur de chaleur étant configuré pour refroidir un milieu liquide s'écoulant à travers le premier échangeur de chaleur.

3. Système de gestion thermique selon la revendication 2, le circuit (7) d'eau de batterie comportant en outre un premier distributeur (706), et le premier distributeur étant disposé entre l'entrée de liquide de la plaque de refroidissement/chauffage de batterie et la sortie de liquide de la pompe à eau de refroidissement ; et
lorsque le premier distributeur est ouvert, un milieu liquide expulsé par la pompe (702) à eau de refroidissement entrant dans la plaque de refroidissement/chauffage de batterie ; ou lorsque le premier distributeur est fermé, un milieu liquide expulsé par la pompe à eau de refroidissement étant empêché d'entrer dans la plaque (703) de refroidissement/chauffage de batterie.

4. Système de gestion thermique selon l'une quelconque des revendications 1 à 3, la branche d'échange de chaleur de sièges comportant en outre un capteur (802) de température, et le capteur de température étant configuré pour mesurer la température du milieu liquide dans l'échangeur de chaleur de sièges.

5. Système de gestion thermique selon l'une quelconque des revendications 1 à 4, le circuit (8) d'eau de sièges comportant en outre un premier réchauffeur, et le premier réchauffeur étant disposé sur le tuyau d'eau de sièges qui est relié à l'extrémité d'entrée de liquide et au circuit (7) d'eau de batterie.

6. Système de gestion thermique selon l'une quelconque des revendications 1 à 4, le circuit (8) d'eau de sièges comportant en outre une première vanne principale de régulation, et la première vanne principale de régulation étant disposée sur le tuyau (805) d'eau de sièges qui est relié à l'extrémité d'entrée de liquide et au circuit (7) d'eau de batterie ; et
lorsque la première vanne principale de régulation est ouverte, le milieu liquide expulsé par la pompe à eau de refroidissement entrant dans le circuit d'eau de sièges ; ou lorsque la première vanne principale de régulation est fermée, le milieu liquide expulsé par la pompe à eau de refroidissement étant empêché d'entrer dans le circuit (8) d'eau de sièges.

7. Système de gestion thermique selon l'une quelconque des revendications 1 à 6, le système de gestion thermique comportant en outre un circuit (9) d'eau de chauffage d'habitacle, le circuit d'eau de chauffage d'habitacle comportant une pompe (9021) à eau d'habitacle et un premier radiateur (903), et la pompe à eau d'habitacle étant reliée au premier radiateur par l'intermédiaire d'un premier tuyau d'eau chaude ; et l'extrémité d'entrée de liquide étant reliée à une entrée de liquide du premier radiateur par l'intermédiaire du tuyau d'eau de sièges, et l'extrémité de sortie de liquide étant reliée à une sortie de liquide du premier radiateur par l'intermédiaire du tuyau d'eau de sièges.

8. Système de gestion thermique selon la revendication 7, le circuit (9) d'eau de chauffage d'habitacle comportant en outre un deuxième échangeur de chaleur, le deuxième échangeur de chaleur, la pompe à eau d'habitacle, et le premier radiateur étant reliés par l'intermédiaire du premier tuyau d'eau chaude ; et le deuxième échangeur de chaleur étant configuré pour chauffer un milieu liquide s'écoulant à travers le deuxième échangeur de chaleur.

9. Système de gestion thermique selon la revendication 7, le circuit (9) d'eau de chauffage d'habitacle comportant en outre un deuxième réchauffeur ; le deuxième réchauffeur, la pompe à eau d'habitacle, et le premier radiateur étant reliés par l'intermédiaire du premier tuyau d'eau chaude ; et le deuxième réchauffeur étant configuré pour chauffer un milieu liquide s'écoulant à travers le deuxième réchauffeur.

10. Système de gestion thermique selon l'une quelconque des revendications 7 à 9, le circuit (9) d'eau de chauffage d'habitacle comportant en outre un deuxième distributeur, et le deuxième distributeur étant disposé entre l'entrée de liquide du premier radiateur et une sortie de liquide de la pompe à eau d'habitacle ; et
lorsque le deuxième distributeur est ouvert, un milieu liquide expulsé par la pompe à eau d'habitacle (9) entrant dans le premier radiateur ; ou lorsque le deuxième distributeur est fermé, un milieu liquide expulsé par la pompe à eau d'habitacle étant empêché d'entrer dans le premier radiateur.

11. Système de gestion thermique selon l'une quelconque des revendications 7 à 10, le circuit (8) d'eau de sièges comportant en outre une deuxième vanne principale de régulation, et la deuxième vanne principale de régulation étant disposée sur le tuyau d'eau de sièges qui est relié à l'extrémité d'entrée de liquide et au circuit (9) d'eau de chauffage d'habitacle ; et
lorsque la deuxième vanne principale de régulation est ouverte, le milieu liquide expulsé par la pompe à eau d'habitacle entrant dans le circuit d'eau de sièges ; ou lorsque la deuxième vanne principale de régulation est fermée, le milieu liquide expulsé par la pompe à eau d'habitacle étant empêché d'entrer dans le circuit d'eau de sièges.

12. Système de gestion thermique selon l'une quelconque des revendications 1 à 11, le système de gestion thermique comportant en outre un circuit (10) d'eau de moteur, le circuit d'eau de moteur comportant un moteur (101), une pompe (102) à eau de moteur, et un deuxième radiateur, et le moteur, la pompe à eau de moteur, et le deuxième radiateur étant reliés par l'intermédiaire d'un deuxième tuyau d'eau chaude ; et
l'extrémité d'entrée de liquide étant reliée à une entrée de liquide du deuxième radiateur par l'intermédiaire du tuyau d'eau de sièges, et l'extrémité de sortie de liquide étant reliée à une sortie de liquide du deuxième radiateur par l'intermédiaire du tuyau d'eau de sièges.

13. Système de gestion thermique selon la revendication 12, le circuit (10) d'eau de moteur comportant en outre un troisième distributeur, et le troisième distributeur étant disposé entre l'entrée de liquide du deuxième radiateur et une sortie de liquide de la pompe à eau de moteur ; et
lorsque le troisième distributeur est ouvert, un milieu liquide expulsé par la pompe à eau de moteur entrant dans le deuxième radiateur ; ou lorsque le troisième distributeur est fermé, un milieu liquide expulsé par la pompe à eau de moteur étant empêché d'entrer dans le deuxième radiateur.

14. Système de gestion thermique selon la revendication 12 ou 13, le circuit (8) d'eau de sièges comportant en outre une troisième vanne principale de régulation, et la troisième vanne principale de régulation étant disposée sur le tuyau d'eau de sièges qui est relié à l'extrémité d'entrée de liquide et au circuit d'eau de moteur ; et
lorsque la troisième vanne principale de régulation est ouverte, le milieu liquide expulsé par la pompe à eau de moteur entrant dans le circuit d'eau de sièges ; ou lorsque la troisième vanne principale de régulation est fermée, le milieu liquide expulsé par la pompe à eau de moteur étant empêché d'entrer dans le circuit d'eau de sièges.

15. Système de gestion thermique selon l'une quelconque des revendications 12 à 14, une vanne d'isolement étant disposée sur le tuyau d'eau de sièges qui est relié à l'extrémité de sortie de liquide et à au moins un circuit parmi le circuit d'eau de batterie, le circuit (9) d'eau de chauffage d'habitacle, ou le circuit (10) d'eau de moteur.

16. Système de gestion thermique selon l'une quelconque des revendications 2 à 6, le système de gestion thermique comportant en outre un circuit d'eau de moteur, et le circuit d'eau de moteur étant raccordé en parallèle au premier échangeur de chaleur et étant configuré pour chauffer le milieu liquide dans le circuit d'eau de batterie.

17. Véhicule électrique, comportant un siège et le système de gestion thermique selon l'une quelconque des revendications 1 à 16, le siège comportant une ossature, une couche de mousse, et une couche de surface de siège, et l'échangeur de chaleur de sièges étant disposé entre la couche de mousse et la couche de surface de siège.
